(19) Europäisches Patentamt
European Patent Office
Office européen des brevets

(11) **EP 1 590 628 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **04705369.9**

(22) Anmeldetag: **27.01.2004**

(51) Int Cl.:
*G01C 5/00* (2006.01) *G01C 5/06* (2006.01)

(86) Internationale Anmeldenummer:
**PCT/CH2004/000041**

(87) Internationale Veröffentlichungsnummer:
**WO 2004/070317 (19.08.2004 Gazette 2004/34)**

(54) **HÖHENMESSER MIT TEMPERATURKORREKTUR**

ALTIMETER HAVING TEMPERATURE CORRECTION

ALTIMETRE CORRECTION DE TEMPERATURE

(84) Benannte Vertragsstaaten:
**AT BE BG CH CY CZ DE DK EE ES FI FR GB GR HU IE IT LI LU MC NL PT RO SE SI SK TR**

(30) Priorität: **06.02.2003 CH 184032003**

(43) Veröffentlichungstag der Anmeldung:
**02.11.2005 Patentblatt 2005/44**

(73) Patentinhaber: **Flytec AG**
**6048 Horw (CH)**

(72) Erfinder:
• **LERCH, Erich**
**CH-6206 Neuenkirch (CH)**

• **JODER, Peter**
**CH-6010 Kriens (CH)**

(74) Vertreter: **Irniger, Ernst**
**Troesch Scheidegger Werner AG**
**Schwäntenmoos 14**
**CH-8126 Zumikon (CH)**

(56) Entgegenhaltungen:
**EP-A- 0 345 929**      **GB-A- 1 214 906**
**US-B1- 6 216 064**      **US-B1- 6 266 583**

EP 1 590 628 B1

**Beschreibung**

Die vorliegende Erfindung betrifft ein Verfahren zum klimabedingten bzw. temperaturbedingten Korrigieren der Höhenangabe an einem Höhenmessgerät gemäss dem Oberbegriff nach Anspruch 1, einen gemäss Funktionsprinzip des Verfahrens arbeitenden Höhenmesser sowie ein Verfahren zur Höhenmessung unter Verwendung des erfindungsgemässen Verfahrens.

Die Entwicklung von elektronischen Höhenmessern mit Drucksensoren auf Siliziumbasis ermöglicht es, dass auch unerfahrene Berggänger einen Höhenmesser mitführen, wie z.B. den Altimeter der Firma Victorinox, CH-6438 Ibach.

Höhenmesser berechnen die entsprechende Höhe auf Grundlage des atmosphärischen Drucks. Zur Anpassung an die täglichen Luftdruckschwankungen müssen diese Geräte daher vor Verwendung jeweils neu kalibriert werden. Für eine einwandfreie Funktion ist die aktuelle Höhe wie z.B. zuhause, am Fuss eines Berges, zu Beginn einer Wanderung, etc. täglich neu einzugeben.

Diese Eingabe ist auch für einen ungeübten Benutzer nachvollziehbar. Schwierig gestaltet sich die Korrektur des Temperaturverlaufes über die Höhe. Viele verschiedene Möglichkeiten zur Korrektur des Temperaturverlaufes werden von Anbietern derartiger Höhenmesser vorgeschlagen, wie beispielsweise auch von der Firma Thommen, CH-4437 Waltenburg, sowie in dem Buch mit dem Titel "Wetterkunde für Wanderer und Bergsteiger" von Peter Albisser, erschienen im SAC Verlag, 3000 Bern, Ausgabe 2001.

Die vorgeschlagenen Methoden sind in der Regel relativ kompliziert und führen auch nicht immer zu guten Ergebnissen, weil die Luft komplex geschichtet sein kann.

In der US 6 216 064, der EP 0 345 929, sowie der GB 1 214 906 werden je Verfahren zur Höhenbestimmung vorgeschlagen, welche eine temperaturbedingte Korrektur vorsehen, basierend auf einem Durchschnitts-Referenztemperaturwert auf Meereshöhe.

Die Aufgabe der vorliegenden Erfindung besteht darin, eine weitere Möglichkeit zu suchen, die eine einfache Benutzung erlaubt und in den meisten Fällen eine genügend gute Korrektur gewährleistet.

In der nachfolgend beschriebenen Erfindung wird davon ausgegangen, dass beinahe alle Höhenmesser gemäss der U.S. Standard Atmosphere 1976, publiziert vom National Geophysical Data Center, Boulder, Colorado, USA, arbeiten. Diese Standardatmosphäre beruht auf einem Druck von 1013.25hPa und einer Temperatur von 15˚C auf Meereshöhe in mittleren Breiten. Dem gegenüber ist der Durchschnittsdruck in der Schweiz beispielsweise SMA Meteo Schweiz AG 1017 hPa, bezogen auf Meereshöhe.

Die oben erwähnte Aufgabe wird aufgrund der geschilderten Voraussetzung mittels eines Verfahrens gemäss dem Wortlaut nach Anspruch 1 gelöst. Vorgeschlagen wird ein Verfahren zum klimabedingten bzw. temperaturbedingten Korrigieren der Höhenangabe an einem Höhenmesser, indem bei der basierend auf einem Durchschnitts-Referenztemperaturwert auf Meereshöhe und einem Durchschnittsluftdruck-Referenzwert auf Meereshöhe erfolgenden Höhenbestimmung die Korrektur durch Veränderung der Referenztemperatur auf Meereshöhe erfolgt.

Dabei wird der Meereshöhe-Temperaturreferenzwert um mindestens ca. 6˚C bzw. 6˚K erhöht, falls die auf einer bestimmten Höhe eruierte bzw. gemessene Temperatur um mindestens ca. 4˚C höher ist als der für diese Höhe geltende Temperatur-referenzwert.

Entsprechend wird der Meereshöhe-Temperaturreferenzwert um mind. ca. 4˚C bzw. 4˚K, vorzugsweise um mind. ca. 6˚C bzw. 6˚K für die Höhenbestimmung nach unten korrigiert, falls der auf einer bestimmten Höhe eruierte bzw. gemessene Temperaturwert um mind. 4˚C tiefer ist als der für diese Höhe geltende Temperatur-Referenzwert.

Aufgrund der oben erwähnten Voraussetzung erfolgt die Korrektur entsprechend dadurch, dass die basierend auf der U.S. Standard Atmosphere 1976 erfolgten Höhenbestimmung durch Veränderung der Referenztemperatur auf Meereshöhe korrigiert wird.

Wie erwähnt wird von einer Durchschnitts-Referenztemperatur auf Meereshöhe von 288.15˚K entsprechend ca. 15˚G ausgegangen und einem Durchschnitts-Referenzdruck von ca. 1013mb. Die Korrektur des Durchschnittsreferenz-Temperaturwertes erfolgt dann, wenn die auf einer bestimmten Höhe über Meer herrschende Temperatur von der sich bezogen auf den Durchschnitts-Temperaturreferenzwert auf Meereshöhe ergebene Referenztemperatur für diese Höhe abweicht.

Weitere bevorzugte Ausführungsvarianten des erfindungsgemässen Verfahrens sind in den abhängigen Ansprüchen charakterisiert.

Die erfindungsgemäss definierten Verfahren eignen sich insbesondere für die temperaturbedingte Korrektur an einem Höhenmesser, welcher nach dem U.S. Standard Atmosphere 1976 arbeitet. Dabei ist es möglich, dass der Höhenmesser drei Einstellungsstufen bei der Höhenangabe aufweist, nämlich eine Angabe bei nach unten abweichender Temperatur, verglichen mit der Referenztemperatur für diese Höhe, wo die Messung stattfindet, eine Normaleinstellung, falls keine Temperaturabweichung festgestellt wird, und eine Einstellung bei erhöhter Temperatur, d.h. wo die Umgebungstemperatur über dem jeweiligen Temperatur-referenzwert liegt.

Selbstverständlich ist es auch möglich, weitere Abstufungen vorzusehen, wie beispielsweise eine Korrektur bei leichter Temperaturabweichung nach unten oder nach oben und je eine Einstellung bei starker Temperaturabweichung nach unten und nach oben und selbstverständlich eine Einstellung für die Situation, wo die Umgebungstemperatur in etwa dem Referenzwert für diese Höhe entspricht.

Wiederum bevorzugte Ausführungsvarianten eines nach dem erfindungsgemässen Verfahren arbeitenden Höhenmessers sind in den abhängigen Ansprüchen charakterisiert.

Schliesslich vorgeschlagen wird ein Verfahren zur Höhenmessung, indem zunächst beispielsweise beim Beginn einer Wanderung oder am Fusse eines Berges der Höhenmesser auf die an diesem Ort festgestellte Höhe über Meer eingestellt bzw. kalibriert wird. Damit wird sichergestellt, dass an einem bestimmten Tag herrschende Druckabweichungen vom Normdruck zumindest teilweise berücksichtigt werden. Diese Kalibrierung ist an sich bekannt und wird bereits heute üblicherweise beim Beginn einer Wanderung oder eines anderen Unternehmens, wie einer Autofahrt, vorgenommen.

Nach dem Anstieg oder nach Durchführung einer Reise wie beispielsweise mittels eines Fahrzeuges wird dann die effektive Höhenmessung vorgenommen, gleichzeitig wird festgestellt, ob die für die jeweilige Höhe gemessenen Aussentemperatur in etwa dem Referenzwert für diese Höhe entspricht oder ob die Temperatur wesentlich zu tief oder wesentlich zu hoch ist. Üblicherweise liegt die Temperatur im Winter eher zu tief und im Sommer herrschen in der Regel zu hohe Temperaturen. Die festgestellten oder geschätzten Temperaturverhältnisse werden am Gerät eingestellt.

Anhand der nachfolgenden Beispiele und unter Bezug auf die beigefügten Figuren wird die Erfindung näher erläutert.

Die nachfolgenden Betrachtungen wurden aufgrund von Ballonsondierungen der Messstelle Payern angeschaut und unter Zuhilfenahme von Wetterdaten der SMA Meteo Schweiz verifiziert.

Die Höheneinstellung erfolgte gleich wie bei einem einfachen Höhenmesser. Neu kann nun erfindungsgemäss eine temperaturbedingte Einstellung gemacht werden. Diese basiert grundsätzlich auf der Tatsache, dass sich warme Luft ausdehnt und deshalb die Luftsäule höher ist, was zu einem erhöhten Druck in einer bestimmten Höhe führt. Der Höhenmesser zeigt eine zu niedrige Höhe an. Es erscheint auf einem Höhenmesser so, als ob die Höhenabnahme langsamer erfolgt als bei einer Luftsäule mit normaler Temperatur nach U.S. Standard 1976. Diese Wettereinstellung musste bereits schon bei älteren mechanischen Geräten gemacht werden, nun wird sie automatisiert.

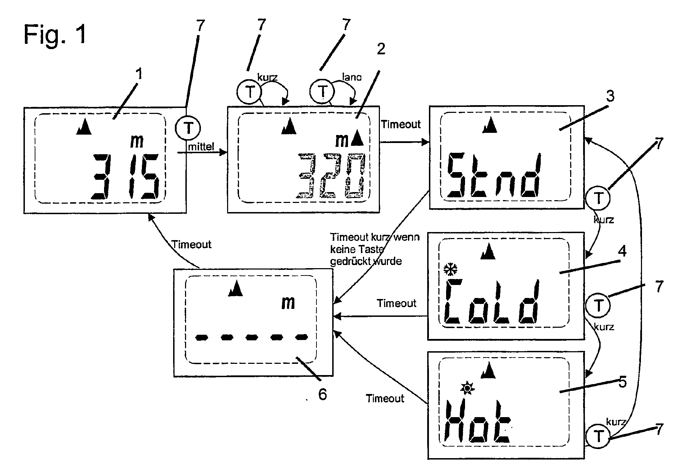

Diese Wettereinstellung könnte beispielsweise auch in einem Set-Menü erfolgen, dort ist sie aber schwerer, d.h. über mehr Tastendrücke erreichbar und wird deshalb in der Regel vergessen. Entsprechend wird erfindungsgemäss und wie unter Bezug auf Fig. 1 vorgeschlagen, dem Benutzer eine möglichst einfache Handhabung anzubieten, dass er am Höhenmesser möglichst einfach die wetterbedingte bzw. temperaturbedingte Korrektur vornehmen kann.

In Bezug auf Fig. 1, in welcher schematisch das erfindungsgemässe Verfahren dargestellt ist, wird in einer Ausgangslage A beispielsweise bei Tagesbeginn oder beim Antritt einer Reise oder einer Wanderung der Höhenmesser kalibriert, wobei die Anzeige 1 die alte Höhe am Anfangs- bzw. Ausgangsort anzeigt, die nun z.B. wegen einer Luftdruckänderung nicht mehr stimmt. Um die Angabe auf dem Höhenmesser mit der richtigen geometrischen Höhe in Übereinstimmung zu bringen, wird nun ein Betätigungsmittel 7, wie beispielsweise eine Drucktaste im Falle, dass in einem Taschenmesser ein Höhenmesser integriert ist das Schweizerkreuz auf dem Taschenmesser betätigt, worauf die vom Höhenmesser unkorrigierte Höhenangabe 2 dargestellt wird. Durch wiederholtes Drücken des Betätigungselementes 7 wird die angezeigte Höhe der aktuellen Höhe angepasst. Bevor das Gerät zur Anzeige der aktuellen Höhe, Anzeige 1, zurückkehrt, gelangt man in den Temperaturkorrekturmodus, welcher zunächst eine Anzeige 3 "Stnd" = Standard darstellt, bei welcher keine Temperaturkorrektur erfolgt, sondern nach der Standardformel nach U.S. Standard 1976 rechnet. Durch erneutes Betätigen des Elementes 7 kann man die Anzeige "Cold" versehen mit dem Schneesternsymbol einstellen, falls die Temperatur an diesem Ort tiefer ist, als der entsprechende Referenztemperaturwert. Durch wiederum erneutes Betätigen des Elementes 7 erscheint die Anzeige "Hot" mit dem Sonnensymbol, für den Fall, dass eine zu hohe Temperatur herrscht. Nach einer gewissen Zeit erfolgt automatisches Rückstellen via Anzeige 6 auf die aktuelle Höhe Anzeige 1.

Der in Fig. 1 dargestellte Vorschlag ist derart, dass ein ungeübter Benutzer lediglich die Höhe zu Tagesbeginn oder beim Antritt einer Reise einstellen, bzw. den Höhenmesser kalibrieren muss. Wenn er nichts macht, erfolgt die Höhenangabe am jeweiligen Ort gemäss der Berechnung nach U.S. Standard 1976. Durch einfaches Betätigen einer Drucktaste während der normalen Höhenkalibration kann der Wetter- bzw. Temperaturtyp gewählt werden, und der Benutzer wird auf die höhenmässige Korrektur infolge abweichender Temperatur aufmerksam gemacht.

Berechnungsverfahren:

Das Berechnungsverfahren für die Höhenangabekorrektur basiert auf den Definitionen der U.S. Standard Atmosphere 1976.

Die Berechnungsformel 33a auf Seite 12 des U.S. Standard Atmosphere 1976 hat folgende Formel:

$$P = P_b \cdot \left[ \frac{T_{M,b}}{T_{M,b} + L_{M,b} \cdot (H - H_b)} \right]^{\left[ \frac{g_0' \cdot M_0}{R^* \cdot L_{M,b}} \right]}$$

Der U.S. Standard 1976 teilt die Atmosphäre in 8 Schichten ein. Die unterste Schicht geht dabei bis 11 km Höhe. Sie hat den Index b=0. Damit lautet die Formel für die untersten 11 km:

$$P = P_0 \cdot \left[ \frac{T_{M,0}}{T_{M,0} + L_{M,0} \cdot (H - H_0)} \right]^{\left[ \frac{g_0' \cdot M_0}{R^* \cdot L_{M,0}} \right]}$$

Definitionen:

| | | | |
|---|---|---|---|
| $g_o$ | 9.80665 | m s$^{-2}$ | Gravitationsbeschleunigung auf der geografischen Breite $\square$ = 45˚ und der geometrischen Höhe z = 0müM |
| $g_o'$ | 9.80665 | m' s$^{-2}$ | Zahlenmässig gleich wie $g_0$. Sie geht aber von der geopotentiellen Höhe gemäss der Definition von h weiter unten aus. |
| $R^* = R_{star}$ | 8.31432*10$^3$ | Nm kmol$^{-1}$ K$^{-1}$ Universelle Gaskonstante (R * M) gemäss Table 3 page 3 US Standard Atmosphere | |

$$M_0 = \frac{\sum (F_i \cdot M_i)}{\sum F_i}$$

| | | | |
|---|---|---|---|
| $M_0$ | 28.964425 | kg kmol-1 | Relative Molekülmasse von trockener Luft |
| $T_0,$ | $T_{M,0}$288.15 | K | Temperatur trockener Luft auf der geometrischen Höhe z = 0müM gemäss Definition U.S. Standard 1976 page 4, Diese Definition basiert auf einem |
| | | | Beschluss der Commission Internationale de Navigation Aérienne CINA (International Commission for Air Navigation ICAN) von 1924 |
| $\gamma$, $L_{M,0}$ | -6.50*10-3 | K m-1 | Temperaturgradient der polytropen Atmosphäre bis 11km Höhe |
| h, H | | gpm, m' | geopotentielle Höhe, d.h. diejenige Höhe um die eine Masse von 1kg im Schwerefeld der Erde gehoben werden muss, damit ihre potentielle Energie um 9.80665 Nm zunimmt. Ein m' ändert seine geometrische Länge in Abhängigkeit der Erdbeschleunigung g auf verschiedenen Höhen. Die Unterschiede sind aber so klein, dass man sie für normale Berechnungen vernachlässigen kann |
| $H_0$ | 0 | m | Meereshöhe |
| $p_o$, $P_0$ | 1013.25 | hPa | Normaldruck auf z = 0müM |
| p, P | | hPa | Luftdruck auf der geopotentiellen Höhe h [müM] |

Damit bekommt die Formel die Form:

$$p = p_0 \left[ \frac{T_0}{T_0 + \gamma \cdot h} \right]^{\left[ \frac{g_0 \cdot M_0}{R^* \cdot \gamma} \right]}$$

$$\frac{p}{p_0} = \left[ \frac{T_0}{T_0 + \gamma \cdot h} \right]^{\left[ \frac{g_0 \cdot M_0}{R^* \cdot \gamma} \right]}$$

$$\left[ \frac{p}{p_0} \right]^{\left[ \frac{R^* \cdot \gamma}{g_0 \cdot M_0} \right]} = \left[ \frac{T_0}{T_0 + \gamma \cdot h} \right]$$

$$\left[ \frac{T_0}{T_0 + \gamma \cdot h} \right] = \left[ \frac{p}{p_0} \right]^{\left[ \frac{R^* \cdot \gamma}{g_0 \cdot M_0} \right]}$$

$$\left[ \frac{T_0 + \gamma \cdot h}{T_0} \right] = \left[ \frac{p}{p_0} \right]^{\left[ -\frac{R^* \cdot \gamma}{g_0 \cdot M_0} \right]}$$

$$\left[ 1 + \frac{\gamma \cdot h}{T_0} \right] = \left[ \frac{p}{p_0} \right]^{\left[ -\frac{R^* \cdot \gamma}{g_0 \cdot M_0} \right]}$$

$$\frac{\gamma \cdot h}{T_0} = -1 + \left( \frac{p}{p_0} \right)^{\left[ -\frac{R^* \cdot \gamma}{g_0 \cdot M_0} \right]}$$

$$h = -\frac{T_0}{\gamma} \left( 1 - \left( \frac{p}{p_0} \right)^{\left[ -\frac{R^* \cdot \gamma}{g_0 \cdot M_0} \right]} \right)$$

und erhält damit die bei uns übliche Form

$$h = \frac{-T_0}{\gamma} \cdot \left(1 - \left(\frac{p}{p_0}\right)^{\frac{-R^* \cdot \gamma}{g_0 \cdot M_0}}\right)$$

mit den obigen Werten eingesetzt

$$h = \frac{288.15}{0.0065} * \left(1 - \sqrt[5.255]{\frac{p}{p_0}}\right)$$

Die Temperaturkorrektur erfolgt nun gemäss der vorliegenden Erfindung auf folgender Formel:

$$h = \frac{-T_0 + \Delta T}{\gamma} \cdot \left(1 - \left(\frac{p}{p_0}\right)^{\frac{-R^* \cdot \gamma}{g_0 \cdot M_0}}\right)$$

oder eingesetzt

$$h = \frac{288.15 + \Delta T}{0.0065} * \left(1 - \sqrt[5.255]{\frac{p}{p_0}}\right)$$

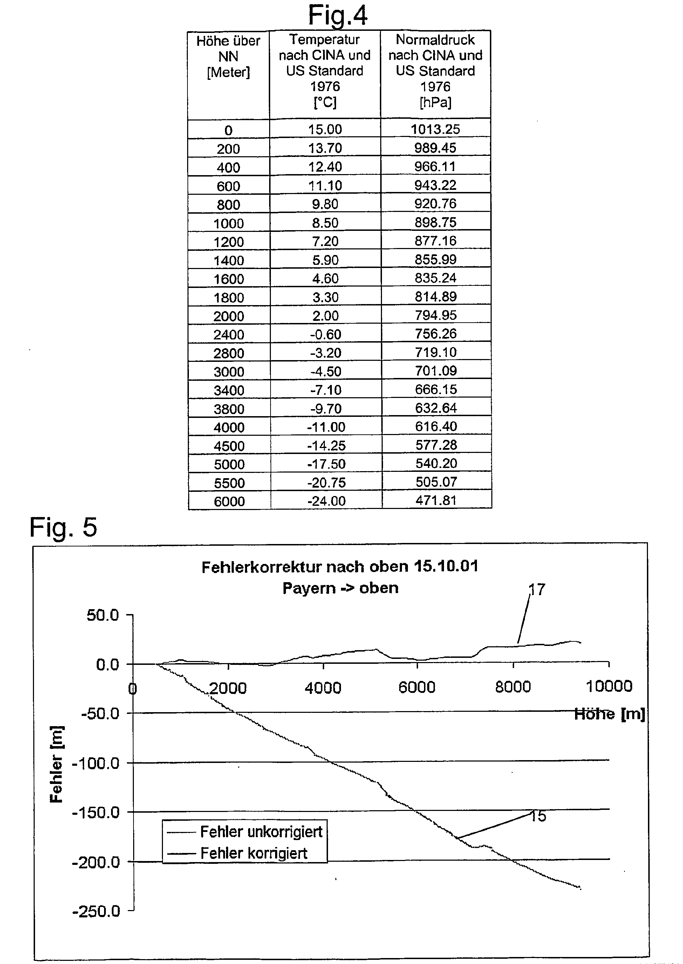

Dabei ist $\Delta T$ die Temperaturabweichung in $^{\circ}$C vom Sollwert gemäss Fig. 4. Dieser Wert kann positiv oder negativ sein. Das Verfahren geht davon aus, dass die Luftschichten oberhalb des Beobachters bis ca. 11km Höhe als ganzes zu kalt oder zu warm sind. Dies ist nicht immer der Fall. Beim Durchzug von Fronten können die Luftschichten kompliziert geschichtet sein. Dann liefert das Verfahren einen schlechteren Wert. Die Auswertung von Wetterdaten der SMA Meteo Schweiz AG für das Jahr 2000 hat aber gezeigt, dass die Annahme von zu warmen oder zu kalten Luftmassen die meiste Zeit stimmt. Dies lässt sich meteorologisch damit begründen, dass nach dem Durchzug einer Front, die gesamte Atmosphäre bis 11km Höhe zu warm oder zu kalt ist.

Erfindungsgemäss wird nun vorgeschlagen, dass der Wert $T_0$ durch einen Wert ersetzt wird, der die zu warme oder zu kalte Luft berücksichtigt. Mit anderen Worten wird ein Wert 288.15 -$\Delta T$ oder ein Wert 288.15 +$\Delta T$ eingesetzt.

Erfindungsgemäss hat es sich gezeigt, dass in dem Falle, wo die Aussentemperatur um mehr als 4$^{\circ}$ vom jeweiligen Referenzwert abweicht, eine temperaturbedingte Korrektur vorzunehmen ist, wobei bei einer Abweichung von mehr als +4$^{\circ}\Delta T$ einen Wert von +6$^{\circ}$ einnimmt und bei einer Abweichung von mehr als -4$^{\circ}\Delta T$ mit -6$^{\circ}$ in die obige Formel einzusetzen ist.

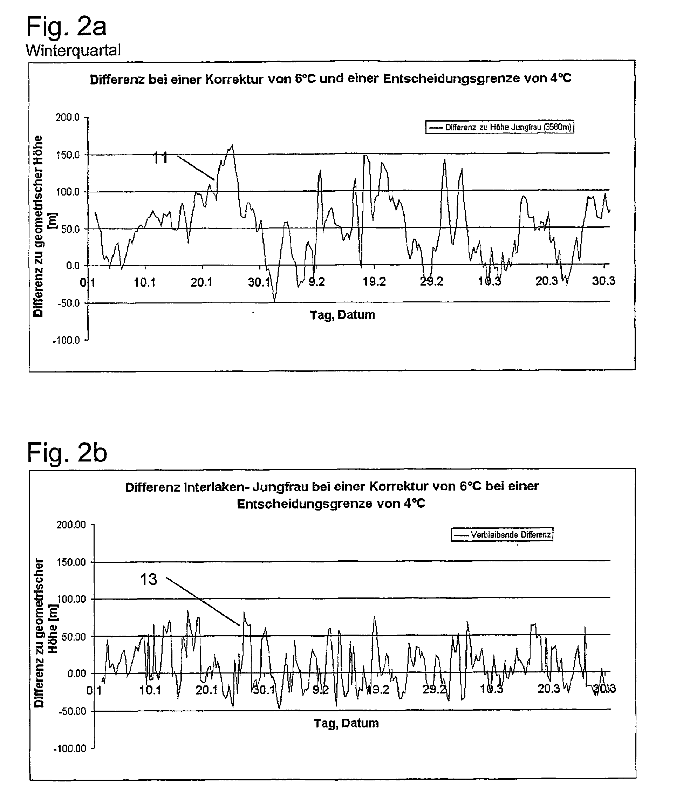

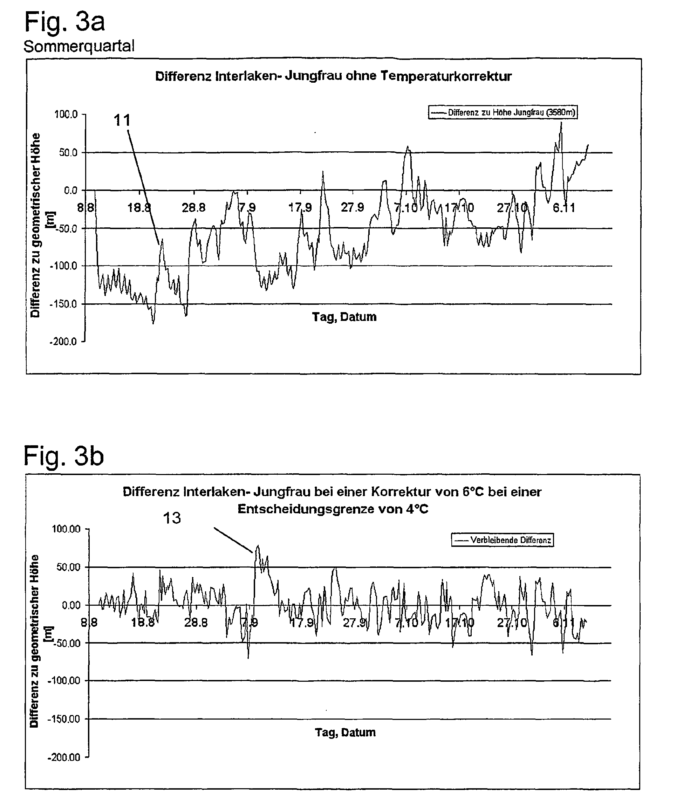

Anhand der Diagramme in den Fig. 2 und 3 soll die Effektivität der Korrektur näher erläutert werden. Diejenige Kurve 11 mit den grösseren Ausschlägen ergibt sich bei einer Kalibrierung auf Höhe Interlaken und einer Höhenmessung auf dem Jungfraujoch bei verschiedenen Temperaturen ohne Korrektur, und die Kurve 13 mit den geringen Ausschlägen zeigt die Höhenmessung auf dem Jungfraujoch bei unterschiedlichen Aussentemperaturen unter Berücksichtigung der Höhenkorrektur.

In den Figuren 2a und 2b sind die Messwerte im Winterquartal dargestellt, wobei Fig. 2a die unkorrigierten Höhenmesswerte darstellt, währenddem in Fig. 2b die

Kurve 13 die Messwerte repräsentiert unter Berücksichtigung des erfindungsgemäss vorgeschlagenen Korrekturverfahrens.

Analog sind in den Fig. 3a und 3b die Messwerte im Sommerquartal dargestellt, wobei wiederum Kurve 11 in Fig. 3a die unkorrigierten Werte repräsentiert, währenddem Kurve 13 in Fig. 3b die Messwerte darstellt unter Berücksichtigung des erfindungsgemäss vorgeschlagenen Korrekturverfahrens.

Ein Vergleich des Kurvenverlaufs je der Kurve 11 mit der entsprechenden Kurve 13 zeigt deutlich, dass die Messwerte unter Berücksichtigung des erfindungsgemäss vorgeschlagenen Korrekturverfahrens wesentlich genauer sind als die Höhenmesswerte, ermittelt bzw. gemessen mit den herkömmlichen Messverfahren.

Grundsätzlich gilt natürlich, dass es schwierig ist, die exakte Lufttemperatur einer Luftschicht zu messen. Für den ungeübten Benutzer bzw. für den Wanderer ist es sogar fast unmöglich. Viel besser ist der subjektive Eindruck, ob es gegenüber U.S. Standard zu warm oder zu kalt sei. Über die Daten des Jahres 2000 wurde eine Statistik erstellt und der optimale eruierte Wert entspricht den obigen Aussagen, d.h. ΔT lag bei 6˚C bei einer Entscheidungsgrenze von 4˚C.

Der beigefügten Tabelle in Fig. 4 können die Norm- bzw. Referenzwerte entnommen werden, welche den jeweiligen Höhen in Meter über Meer entsprechen. So gilt beispielsweise für eine Höhe von 1000 m über Meer eine Referenztemperatur von 8,5˚ und ein Referenzdruck von 898,7mb. Falls sich also eine Person auf 1000 m aufhält und die Temperatur liegt in einem Bereich von ca. 4-12˚, so muss keine temperaturbedingte Korrektur bei der Höhenangabe vorgenommen werden. Liegt allerdings die Temperatur bei 0˚, so ist entsprechend ein ΔT-Wert von -6˚ zu berücksichtigen, d.h. bei einer entsprechenden Menüeinstellung muss die Angabe gewählt werden, welche für zu tiefe Umgebungstemperaturen gilt. Entsprechendes gilt für eine Umgebungstemperatur von beispielsweise 20˚C, indem hier mittels der Menüschaltung gemäss Fig. 1 die Angabe zu wählen ist, welche für zu hohe Umgebungstemperatur gilt.

In Fig. 5 ist ein weiteres Beispiel dargestellt, wie mittels der erfindungsgemässen Korrekturmethode falsche Höhenangaben zuverlässig korrigiert werden können. So wurden am 15. Oktober 2001 in Payern mittels Ballonsondierungen auf verschiedenen Höhen Höhenmesswerte eruiert und unter Zuhilfenahme von Wetterdaten der SMA Meteo Schweiz verifiziert. Dabei zeigt Kurve 15 die Höhenangabe unkorrigiert, d.h. wie sie auf dem in Payern kalibrierten Höhenmessgerät angezeigt worden sind. Kurve 17 zeigt demgegenüber die Messwerte wie sie aufgrund der Temperaturangaben der Meteo Schweiz und entsprechend der erfindungsgemässen Methode verifiziert worden sind. Die Abweichungen der Angaben gemäss Kurve 15 nehmen mit zunehmender Höhe über Payern zu und ergeben beispielsweise bei einer Höhe von 8 km bereits eine Abweichung von -200 m. Demgegenüber weist Kurve 17 praktisch keine Abweichung vom effektiven Wert auf.

Obwohl die in den Beispielen durchgeführten Korrekturen jeweils auf dem U.S. Standard Atmosphere 1976 basieren und entsprechend der oben angeführten Berechnungsmethode erfolgt sind, kann das erfindungsgemäss vorgeschlagene Verfahren auch dann verwendet werden, wenn andere Höhenermittlungsverfahren zur Anwendung gelangen. Vorausgesetzt, dass von einem Temperaturreferenzwert auf Meereshöhe und einem Luftdruck-Referenzwert auf Meereshöhe ausgegangen wird. Entsprechend kann dieser Referenzwert wie erfindungsgemäss vorgeschlagen korrigiert werden, indem bei höherer Umgebungstemperatur ein höherer Wert in die entsprechende Berechnungsformel eingesetzt wird, d.h. ein Wert von 288 +ΔT und im Falle einer niedrigeren Umgebungstemperatur ein Wert von 288 -ΔT.

Wiederum ist es auch möglich, dass ein mehrstufiges Verfahren zur Anwendung gelangt, d.h. dass nicht nur eine Korrekturstufe nach oben und eine Korrekturstufe nach unten gewählt werden kann, wie schematisch in Fig. 1 dargestellt, sondern mehrere Korrekturstufen. So kann bei einer Abweichung der Umgebungstemperatur von beispielsweise ca. 4-6˚ eine erste Korrektur von ΔT +6˚ gewählt werden und bei einer höheren Abweichung von ca. 6-10˚ eine Korrektur von ΔT +10˚. Weitere Abstufungen sind selbstverständlich möglich und können zu den entsprechend durchgeführten Messreihen variiert bzw. angepasst werden.

**Patentansprüche**

1. Verfahren zum klimabedingten bzw. temperaturbedingten Korrigieren der Höhenangabe an einem Höhenmessgerät, **dadurch gekennzeichnet, dass** bei einer basierend auf einem Durchschnittsreferenz-Temperaturwert auf Meereshöhe und einem Durchschnittsluftdruck-Referenzwert auf Meereshöhe erfolgenden Höhenbestimmung die Korrektur durch Veränderung der Referenztemperatur auf Meereshöhe erfolgt, wobei der Meereshöhe-Temperaturreferenzwert um mind. ca. 6˚C bzw. 6˚K für die Höhenbestimmung nach oben korrigiert wird, falls die auf einer bestimmten Höhe eruierte bzw. gemessene Temperatur um mind. ca. 4˚C höher ist, als der für diese Höhe geltende Temperaturreferenzwert bzw. entsprechend der Meereshöhe-Temperaturreferenzwert um mind. ca. 6˚C bzw. 6˚K für die Höhenbestimmung nach unten korrigiert wird, falls die auf einer bestimmten Höhe eruierte bzw. gemessene Temperatur um mind. ca. 4˚C tiefer ist als der für diese Höhe geltende Temperaturreferenzwert.

2. Verfahren nach Anspruch 1, **dadurch gekennzeichnet, dass** die basierend auf der U.S. Standard Atmosphere 1976 erfolgte Höhenbestimmung durch Veränderung der Referenztemperatur auf Meereshöhe korrigiert wird.

3. Verfahren nach einem der Ansprüche 1 oder 2, **dadurch gekennzeichnet, dass** von einem Durchschnittsreferenz-Temperaturwert auf Meereshöhe von ca. 288˚K entsprechend ca. 15˚C ausgegangen wird und einem Durchschnitts-referenzdruck von ca. 1013mb und dass eine Korrektur des Durchschnittsreferenz-Temperaturwertes dann erfolgt, wenn die auf einer bestimmten Höhe über Meer herrschende Temperatur von dem sich bezogen auf den Durchschnittstemperatur-Referenzwert ergebende Temperaturreferenzwert für diese Höhe abweicht.

4. Verfahren nach einem der Ansprüche 1-3, **dadurch gekennzeichnet, dass** die Höhenbestimmung nach U.S. Standard Atmosphere 1976 näherungsweise mit folgender Formel erfolgt:

$$h = \frac{T_{MH} + \Delta T}{0.0065} * \left(1 - \sqrt[5.255]{\frac{p}{p_0}}\right)$$

wobei p= Luftdruck auf Höhe h und wobei $p_0$ = Referenzluftdruck auf Meereshöhe = ca. 1013 mb und
wobei $T_{MH}$ = Referenztemperatur auf Meereshöhe = ca. 288˚K und wobei $\Delta T$ = + 6˚C bei erhöhter Umgebungstemperatur und = -6˚C bei niedrigerer Umgebungstemperatur und = 0 bei Umgebungstemperatur entsprechend in etwa der Referenztemperatur, geltend für die Höhe, in welcher die Messung vorgenommen wird.

5. Verfahren nach einem der Ansprüche 1-4, **dadurch gekennzeichnet, dass** die Korrektur in Stufen erfolgt, d.h. dass $\Delta T$ +6˚ oder -6˚ beträgt für Abweichungen der Umgebungstemperatur in einem Bereich von ca. 4-8˚ im Vergleich zur geltenden Referenztemperatur, und dass $\Delta T$ grösser als +6˚C, wie beispielsweise [6-10˚C] beträgt bei Abweichungen der Umgebungstemperatur in einem Bereich von 8-15˚C oder mehr im Vergleich zur Referenztemperatur.

6. Verfahren nach einem der Ansprüche 4 oder 5, **dadurch gekennzeichnet, dass** $\Delta T$ in drei oder mehr Abstufungen wählbar ist für die Höhenkorrektur bei erhöhter oder erniedrigter Temperatur im Vergleich zum für diese Höhe geltenden Referenztemperatur.

7. Höhenmessgerät arbeitend nach dem U.S. Standard Atmosphere 1976 ausgehend von einem Temperatur-referenzwert auf Meereshöhe, **dadurch gekennzeichnet, dass** eine für die Ermittlung der Höhe vorgesehene Messeinrichtung mit einem Schaltkreis verbunden ist, mittels welchem die temperaturbedingte Höhenkorrektur gemäss dem Verfahren gemäss einem der Ansprüche 1-6 durchführbar ist und wobei weiter eine Menüschaltung vorgesehen ist, um bei der Höhenangabe zwischen mind, drei Einstellungen zu wählen, nämlich normale Umgebungstemperatur, zu tiefe Umgebungstemperatur und zu hohe Umgebungstemperatur.

8. Höhenmessgerät nach Anspruch 7, **dadurch gekennzeichnet, dass** mind. fünf Einstellungen möglich sind, nämlich Umgebungstemperatur im Bereich der Referenztemperatur für die Messhöhe, Umgebungstemperatur um ca. 4 - 8˚ über der Referenztemperatur, Höhenkorrektur für Umgebungstemperatur höher um ca. 6 - 12˚, verglichen mit Referenztemperatur, und entsprechende Korrekturen nach unten bei zu niedriger Umgebungstemperatur.

9. Messverfahren unter Verwendung eines Korrekturverfahrens nach einem der Ansprüche 1-6, **dadurch gekennzeichnet, dass** zunächst auf einer bekannten Höhe das Höhenmessgerät kalibriert bzw. auf die bekannte Höhe eingestellt wird und gegebenenfalls gleichzeitig oder zu einem späteren Zeitpunkt die Umgebungstemperatur mit der für diese Höhe oder für eine später zu ermittelnde Höhe geltenden Referenztemperatur verglichen wird und im Falle einer erhöhten Umgebungstemperatur oder einer zu niedrigen Umgebungstemperatur die Höhenkorrektur gemäss einem Verfahren nach einem der Ansprüche 1-8 erfolgt.

10. Messverfahren nach Anspruch 9, **dadurch gekennzeichnet, dass** die Umgebungstemperatur mittels eines im Höhenmessgerät angeordneten Temperatursensors gemessen und mit der für diese Höhe geltenden Referenztemperatur verglichen wird und dass im Falle einer erhöhten Umgebungstemperatur oder einer zu niedrigen Umgebungstemperatur, die Höhenkorrektur gemäss einem Verfahren nach einem der Ansprüche 1-6 durchgeführt wird.

**Claims**

1. Process for the climate induced or temperature induced correction of the altitude indication on an altimeter, **characterized in that** at an altitude determination, carried out based on an average reference temperature value on sea level and an average barometric pressure reference value on sea level, the correction is effected by modification of the reference temperature on sea level, whereas the sea level temperature reference value is corrected scaling up for at least approximately 6°C or 6°K respectively for the altitude determination if the evaluated and measured temperature on a defined altitude is at least approximately 4°C higher than the temperature reference value applicable for the respective altitude, and correspondingly the sea level temperature reference value is corrected scaling down for at least approximately 6°C or 6°K for the altitude determination if the evaluated or measured temperature on a defined altitude is at least about 4° lower than the temperature reference value applicable for the respective altitude.

2. Process according claim 1, **characterized in that** the altitude determination, based on the US Standard Atmosphere 1976 is corrected by modification of the reference temperature on sea level.

3. Process according to one of the claims 1 or 2, **characterized in that**, as a basis, an average reference temperature on sea level of approximately 288°K, equivalent to approximately 15°C, and an average reference pressure of approximately 1013mb is applied and that a correction of the average reference temperature value is carried out when the existing temperature on a defined altitude above sea level differs from the resulting temperature reference value for the respective altitude referred to the average temperature reference value.

4. Process according to one of the claims 1 to 3, **characterized in that** the altitude determination is carried out according the US Standard Atmosphere 1976, approximately using the following formula:

$$h = \frac{T_{MH} + \Delta T}{0.0065} * \left(1 - \sqrt[5.255]{\frac{p}{p_0}}\right)$$

Whereas p = air pressure on altitude h, and whereas $p_0$ = reference air pressure on sea level = approximately 1013mb, and whereas $T_{MH}$ = reference temperature on sea level = approximately 288°K, and whereas $\Delta T$ = +6°C at an elevated environmental temperature und = -6°C at lowered environmental temperature, and = 0 at environmental temperature corresponding approximately to the reference temperature valid for the altitude at which the measuring has been carried out.

5. Process according to one of the claims 1 to 4, **characterized in that** the correction is carried out in steps, meaning that $\Delta T$ is +6° or -6° for deviations of the environmental temperature in a range of approximately 4 to 8° compared to the applicable reference temperature and that $\Delta T$ is larger than +6°, as e.g. [6-10°C] at deviations of the environmental temperature in the range of 8-15°C or more compared to the reference temperature.

6. Process according to one of the claims 4 or 5, **characterized in that** $\Delta T$ can be chosen in three or more steps for the altitude correction at elevated or lowered temperature compared to the reference temperature applicable to the respective altitude.

7. Altitude measuring device working according the US Standard Atmosphere 1976, starting from a temperature reference value on sea level, **characterized in that** a measuring device provided for the determination of the altitude is connected to a circuit, by means of which the temperature induced altitude correction according to the process of one of the claims 1 to 6 is accomplishable, and whereas further a menu switching is provided to choose between at least three settings at the altitude indication, namely normal environmental temperature, too low environmental temperature and too high environmental temperature.

8. Altitude measuring device according to claim 7, **characterized in that** at least five settings are possible, namely environmental temperature in the range of the reference temperature for sea level, environmental temperature at about 4-8° above the reference temperature, altitude correction for environmental temperature higher for approximately 6-12° compared with the reference temperature and corresponding correction scaling down at too low environmental temperature.

9. Measuring process by using a correction process according to one of the claims 1 to 6, **characterized in that** first on a known level the altitude measuring device is calibrated or adjusted to a known altitude respectively, and eventually at the same time or later, the environmental temperature is compared with the applicable reference temperature for this altitude or for an altitude to be determined later on, and in case of an elevated environmental temperature or a too low environmental temperature the altitude correction is executed according a process according to one of the claims 1 to 6.

10. Measuring process according claim 9, **characterized in that** the environmental temperature is measured by means of a temperature sensor arranged within the altitude measuring device, and is compared with the applicable reference temperature for the particular altitude, and that in case of an elevated environmental temperature or a too low environmental temperature the altitude correction is executed by means of a process according to one of the claims 1 to 6.

**Revendications**

1. Procédé pour corriger l'indication d'altitude sur un altimètre en fonction du climat et de la température, **caractérisé en ce qu'**avec une définition d'altitude basée sur une valeur de température de référence moyenne au niveau de la mer et sur une valeur de référence de pression atmosphérique moyenne au niveau de la mer, la correction se fait grâce à une modification de la température de référence au niveau de la mer, étant précisé que la valeur de référence de température au niveau de la mer est corrigée vers le haut d'au moins 6˚C ou 6˚K, environ, pour la définition d'altitude au cas où la température identifiée ou mesurée à une altitude définie est supérieure d'au moins 4˚C, environ, à la valeur de référence de température valable pour cette altitude, ou elle est corrigée vers le bas d'au moins 6˚C ou 6˚K, environ, au cas où la température identifiée ou mesurée à une altitude définie est inférieure d'au moins 4˚C, environ, à la valeur de référence de température valable pour cette altitude.

2. Procédé selon la revendication 1, **caractérisé en ce que** la définition d'altitude basée sur l'atmosphère standard U.S. 1976 est corrigée grâce à une modification de la température de référence au niveau de la mer.

3. Procédé selon la revendication 1 ou 2, **caractérisé en ce qu'**on part d'une valeur de température de référence moyenne au niveau de la mer d'environ 288˚K, soit 15˚C, et d'une pression de référence moyenne d'environ 1013 mb, et **en ce qu'**une correction de la valeur de température de référence moyenne a lieu lorsque la température qui règne à une altitude définie au-dessus du niveau de la mer est différente de la valeur de référence de température pour cette altitude qui est obtenue par rapport à la valeur de référence de température moyenne.

4. Procédé selon l'une des revendications 1 à 3, **caractérisé en ce que** la définition d'altitude se fait suivant l'atmosphère standard U.S. 1976 approximativement avec la formule suivante :

$$h = \frac{T_{MH} + \Delta T}{0.0065} * \left(1 - {}^{5.255}\sqrt{\frac{p}{p_0}}\right)$$

dans laquelle p = pression atmosphérique à l'altitude h,
$p_0$ = pression atmosphérique de référence au niveau de la mer = environ 1013 mb,
$T_{MH}$ = température de référence au niveau de la mer = environ 288˚K et
$\Delta T$ =+6˚C si la température ambiante est supérieure, =-6˚C si la température ambiante est inférieure, et =0 si la température ambiante correspond à peu près à la température de référence, pour l'altitude où la mesure est réalisée.

5. Procédé selon l'une des revendications 1 à 4, **caractérisé en ce que** la correction se fait par paliers, c'est-à-dire que $\Delta T$ est de +6˚ ou de -6˚ pour les écarts de l'ordre d'environ 4-8˚ entre la température ambiante et la température de référence valable, et **en ce que** $\Delta T$ est supérieur à +6˚C et est par exemple de [6-10˚C] pour les écarts de l'ordre de 8-15˚C ou plus entre la température ambiante et la température de référence.

6. Procédé selon la revendication 4 ou 5, **caractérisé en ce que** $\Delta T$ peut être choisi dans trois gradations ou plus pour la correction d'altitude en cas de température supérieure ou inférieure à la température de référence valable pour cette altitude.

7. Altimètre fonctionnant selon l'atmosphère standard "U.S. Standard Atmosphere 1976" à partir d'une valeur de référence de température au niveau de la mer, **caractérisé en ce qu'**un dispositif de mesure prévu pour déterminer l'altitude est relié à un circuit de commutation à l'aide duquel la correction d'altitude en fonction de la température peut être réalisée suivant le procédé selon l'une des revendications 1 à 6, et il est également prévu une commande par menu pour choisir parmi au moins trois réglages, pour l'indication d'altitude : température ambiante normale, température ambiante trop basse et température ambiante trop élevée.

8. Altimètre selon la revendication 7, **caractérisé en ce qu'**au moins cinq réglages sont possibles : température ambiante située dans la plage de la température de référence pour l'altitude de mesure, température ambiante supérieure d'environ 4-8˚ à la température de référence, correction d'altitude pour une température ambiante supérieure d'environ 6-12˚ à la température de référence et corrections correspondantes vers le bas si la température ambiante est trop basse.

9. Procédé de mesure utilisant un procédé de correction selon l'une des revendications 1 à 6, **caractérisé en ce qu'**on commence par étalonner l'altimètre à une altitude connue ou par le réglage à l'altitude connue, et éventuellement en même temps ou ultérieurement la température ambiante est comparée à la température de référence valable pour cette altitude ou pour une altitude à déterminer plus tard, et en cas de température ambiante supérieure ou inférieure, la correction d'altitude se fait suivant un procédé selon l'une des revendications 1 à 8.

10. Procédé de mesure selon la revendication 9, **caractérisé en ce que** la température ambiante est mesurée à l'aide d'un capteur de température disposé dans l'altimètre et est comparée à la température de référence valable pour cette altitude, et **en ce que** dans le cas d'une température ambiante supérieure ou trop basse, la correction d'altitude est effectuée suivant un procédé selon l'une des revendications 1 à 6.

Fig. 1

# Fig. 2a
Winterquartal

Differenz bei einer Korrektur von 6°C und einer Entscheidungsgrenze von 4°C

# Fig. 2b

Differenz Interlaken- Jungfrau bei einer Korrektur von 6°C bei einer Entscheidungsgrenze von 4°C

# Fig. 3a
Sommerquartal

**Differenz Interlaken- Jungfrau ohne Temperaturkorrektur**

# Fig. 3b

**Differenz Interlaken- Jungfrau bei einer Korrektur von 6°C bei einer Entscheidungsgrenze von 4°C**

# Fig.4

| Höhe über NN [Meter] | Temperatur nach CINA und US Standard 1976 [°C] | Normaldruck nach CINA und US Standard 1976 [hPa] |
|---|---|---|
| 0 | 15.00 | 1013.25 |
| 200 | 13.70 | 989.45 |
| 400 | 12.40 | 966.11 |
| 600 | 11.10 | 943.22 |
| 800 | 9.80 | 920.76 |
| 1000 | 8.50 | 898.75 |
| 1200 | 7.20 | 877.16 |
| 1400 | 5.90 | 855.99 |
| 1600 | 4.60 | 835.24 |
| 1800 | 3.30 | 814.89 |
| 2000 | 2.00 | 794.95 |
| 2400 | -0.60 | 756.26 |
| 2800 | -3.20 | 719.10 |
| 3000 | -4.50 | 701.09 |
| 3400 | -7.10 | 666.15 |
| 3800 | -9.70 | 632.64 |
| 4000 | -11.00 | 616.40 |
| 4500 | -14.25 | 577.28 |
| 5000 | -17.50 | 540.20 |
| 5500 | -20.75 | 505.07 |
| 6000 | -24.00 | 471.81 |

# Fig. 5

Fehlerkorrektur nach oben 15.10.01
Payern -> oben

Fehler [m] — Höhe [m]

Fehler unkorrigiert
Fehler korrigiert